# EUROPÄISCHE PATENTANMELDUNG

(11) **EP 2 006 510 A2**
(43) Veröffentlichungstag der Anmeldung: **24.12.2008**
(21) Anmeldenummer: 08104218.6
(22) Anmeldetag: 02.06.2008
(51) Int. Cl.: F02C 3/20

(54) **Gasturbinenanlage und Verfahren zum Betrieb**

(30) Priorität: 19.06.2007 DE 102007028136
(71) Anmelder: Messer Group GmbH, 65843 Sulzbach (DE)
(72) Erfinder: Grohmann, Paul, 2372, Gießhübl (AT)
(74) Vertreter: Münzel, Joachim R.

(57) **Zusammenfassung**

Gasturbinenanlagen, insbesondere Gasturbinenanlagen zum Erzeugen elektrischer Energie, sind mit einer einen Verdichter, eine Brennkammer und eine Gasturbine aufweisenden Turbogruppe, einer Brennstoffzuführung zum Zuführen von gasförmigem oder flüssigem Brennstoff zur Turbogruppe, einer Zuführung für ein Oxidationsmittel und mit einer Rauchgasableitung ausgerüstet. Als Oxidationsmittel wird dabei in der Regel Luft eingesetzt, die aus der Außenumgebung angesaugt und in den Verdichter der Gasturbine eingespeist wird. Somit muss ein Teil der erzeugten Energie dazu verwandt werden die zur Verbrennung eingesetzte Luft zu verdichten.
Im Brennstoff ist ein Moderationsgas anwesend und als Oxidationsmittel wird Sauerstoffgas eingesetzt, der bevorzugt unter Druck unmittelbar in die Brennkammer eingeleitet wird. Der Sauerstoff wird dabei bevorzugt durch Verdampfen von Flüssigsauerstoff erzeugt, wobei während des Verdampfens der zur Zuführung an die Brennkammer der Gasturbine erforderliche Druck erzeugt wird. Es ist also nicht erforderlich, einen Teil der in der Gasturbine erzeugten Energie zur Verdichtung des Oxidationsmittels einzusetzen.

## Beschreibung

Die Erfindung betrifft eine Gasturbinenanlage, insbesondere zum Erzeugen elektrischer Energie, mit einer einen Verdichter, eine Brennkammer und eine Turbine aufweisenden Turbogruppe, mit einer Brennstoffzuführung zum Zuführen von gasförmigem oder flüssigem Brennstoff, mit einer Zuführung für ein Oxidationsmittel zur Turbogruppe und mit einer Rauchgasableitung zum Abführen von Verbrennungsabgasen aus der Turbogruppe.

Desweiteren bezieht sich die Erfindung auf ein Verfahren zum Betreiben einer Anlage zur Energieerzeugung.

Derartige Gasturbinenanlagen bzw. Verfahren sind bekannt und werden zur Stromerzeugung, aber auch in anderen technischen Bereichen eingesetzt. Eine beispielsweise in der DE 10 2005 015 151 A1 beschriebene Gasturbine umfasst eine dort als "Turbogruppe" bezeichnete Baugruppe umfassend eine Gasturbine, einen Verdichter und eine Brennkammer, welche in einem den Verdichter mit der Turbine verbindenden Gaspfad angeordnet ist. Beim Betrieb dieser Gasturbinenanlage wird ein Brennstoff sowie ein in einer Frischgaszuleitung herangeführtes Oxidationsmittel, üblicherweise Luft, im Verdichter verdichtet und der Brennkammer zugeführt. Beim Brennstoff handelt es sich beispielsweise um ein Synthesegas, enthaltend H₂ + CO oder ein Kohlenwasserstoffe enthaltenes Gasgemisch.

Der Gegenstand der DE 10 2005 015 151 A1 umfasst weiterhin eine Abgasrückführung, mittels der das bei der Verbrennung des Frischgases entstehende Abgas zur Moderation des Verbrennungsvorgangs ganz oder teilweise in den Frischgaspfad rückgeführt wird. Durch die Rückführung von Verbrennungsgas in die Brennkammer wird der Sauerstoffgehalt und damit die Flammentemperatur in der Verbrennungszone reduziert und somit die Bildung von Stickoxiden unterdrückt. Ferner kann der Gasturbine eine Dampfturbinenanordnung zur Verwertung der bei der Verbrennung anfallenden Wärmeenergie nachgeschaltet sein.

Brennstoff und Oxidationsmittel werden bei diesem Gegenstand vor Zuführung an den Verdichter der Gasturbine auf den gleichen Druck gebracht; Demzufolge wird davon ausgegangen, dass Brennstoff und Oxidationsmittel bei gleichen Drücken vorliegen. Dies ist jedoch nicht immer der Fall.

Aufgabe der Erfindung ist demnach, den Aufbau und die Verfahrensführung bei Anlagen zur Energieerzeugung, insbesondere Gasturbinenanlagen, im Hinblick auf unterschiedliche Ausgangsdrücke bei Brennstoff und Oxidationsmittel, sowie auf die in der Brennkammer herrschende Temperatur zu optimieren.

Gelöst ist diese Aufgabe bei einer Gasturbinenanlage der eingangs genannten Art dadurch, dass die Brennstoffzuführung in den Verdichter der Turbogruppe einmündet und die Zuführung für das Oxidationsmittel eine an eine Sauerstoffquelle angeschlossene Sauerstoffzuleitung umfasst, die in die Brennkammer einmündet.

Bei der erfindungsgemäßen Gasturbinenanlage wird also nur der - im wesentlichen drucklos oder mit einem geringeren Druck als dem Betriebsdruck der Gasturbine herangeführte - Brennstoff dem Verdichter der Gasturbine zugeführt, während die Zuführung für das Oxidationsmittel unmittelbar in die Brennkammer einmündet. Die Erfindung macht dabei von der Erkenntnis Gebrauch, dass es verhältnismäßig einfach ist, Sauerstoff mit hohen Drücken, wie sie insbesondere in der Brennkammer erforderlich sind, herzustellen. Es ist somit nicht erforderlich, Brennstoff und Sauerstoff vor der Zuführung an die Turbogruppe auf einen gleichen Druck zu bringen. Die erfindungsgemäße Gasturbinenanlage eignet sich insbesondere zum Erzeugen elektrischer Energie.

Eine besonders vorteilhafte und einfache Möglichkeit, Sauerstoff mit dem geforderten hohen Druck bereit zu stellen ist dadurch gegeben, dass in einem Behälter vorliegender Flüssigstickstoff in einem Druckaufbauverdampfer verdampft wird. Der Sauerstoff wird also im flüssigen Zustand bereitgestellt und im Wesentlichen durch Verdampfen auf einen Druck von beispielsweise 40-120 bar gebracht, der zur unmittelbaren Einleitung in die Brennkammer erforderlich und geeignet ist. Es sind jedoch andere Mechanismen denkbar, bei denen Sauerstoff prozessbedingt unter hohen Drücken vorliegt und unmittelbar in die Brennkammer eingespeist werden kann. Eine gesonderte Kompression des zugeführten Oxidationsmittels mit dem damit verbundenen Energieaufwand ist somit entbehrlich.

Bevorzugt ist die die Brennstoffzuführung mit einer Zuleitung für ein Moderationsgas verbunden. Beim Moderationsgas handelt es sich um ein Inertgas, das den Sauerstoffanteil des Verbrennungsgases mindert und somit die Flammentemperatur reduziert, was insbesondere der Schonung des eingesetzten Materials dient. Insbesondere handelt es sich bei dem Moderationsgas um Kohlendioxid. Das Moderationsgas kann dabei bereits dem zugeführten Brennstoff beigemischt sein. So kann beispielsweise aus natürlichen Quellen stammendes, stark kohlendioxidhaltiges Erdgas unmittelbar und ohne weitere verfahrenstechnischen Trennschritte als Brennstoff eingesetzt werden, wobei der Kohlendioxidanteil als Moderationsgas fungiert.

Eine andere vorteilhafte Ausführungsform sieht vor, dass die Rauchgasableitung über eine Rückführung mit der Brennstoffzuleitung verbunden ist. Das bei der Verbrennung entstehende Rauchgas wird somit ganz oder teilweise als Moderationsgas eingesetzt. Durch eine geeignete Regelung kann dabei die zur Herstellung optimaler Verhältnisse hinsichtlich Temperatur in der Brennkammer oder der Effizienz des Verbrennungsprozesses erforderliche Menge und Temperatur des zuzuführenden Moderationsgas gesteuert werden.

Die Aufgabe der Erfindung wird auch durch ein Verfahren mit den Merkmalen des Patentanspruchs 5 gelöst. Dabei wird bei einem Verfahren zum Betreiben einer Energieerzeugungsanlage, insbesondere einer Gasturbine und/oder eines Dampfkessels, ein mit einem Moderationsgas versetzter gasförmiger oder flüssiger Brennstoff der Brennkammer der Turbogruppe einer Gasturbine und/oder eines Dampfkessels zugeführt. Das Moderationsgas verhindert trotz des Einsatzes von reinem Sauerstoff bzw. sauerstoffreichem Gas als Oxidationsmittel die Entstehung zu hoher Temperaturen in der Brennkammer. Das erfindungsgemäße Verfahren kann daher auch in konventionellen, sonst mit Luft als Oxidationsmittel arbeitenden Brennkammern eingesetzt werden.

Insbesondere im Falle der Gasturbine wird bevorzugt zunächst der mit Moderationsgas versetzte Brennstoff verdichtet und der Brennkammer zugeführt, anschließend wird unter hohem Druck vorliegender Sauerstoff unmittelbar in die Brennkammer der Gasturbine eingeleitet und mit dem Brennstoff zu einem Rauchgas verbrannt. Es findet also keine Komprimierung des gasförmigen Oxidationsmittels im Verdichter der Gasturbinenanlage statt, sondern Sauerstoffgas, das prozessbedingt bei hohem Druck vorliegt, beispielsweise aus einem Verdampfer der einem Flüssigsauerstofftank nachgeschaltet ist, wird herangeführt und unmittelbar in die Brennkammer eingeleitet.

Bevorzugt wird das bei der Verbrennung des Brennstoffs mit dem Sauerstoff entstehende Rauchgas als Moderationsgas zumindest teilweise dem Brennstoff zugeführt.

Besonders vorteilhaft erweist sich, wenn als mit Moderationsgas versetzter Brennstoff ein Gas mit hohem Inertgasanteil, insbesondere ein kohlendioxidhaltiges Erdgas, Biogas oder Synthesegas zum Einsatz kommt. So sind beispielsweise Erdgase mit hohen Kohlendoxidanteilen von über 10% aus natürlichen Quellen bekannt. Derzeit wird der Kohlendioxidanteil dieser Erdgase bei der Förderung in die Umgebungsluft abgegeben und führt somit zur Anreicherung von Kohlendioxid in der Atmosphäre. Durch die Erfindung ist es jedoch möglich, das geförderte Gasgemisch von Kohlenwasserstoffen und Kohlendioxid in der Brennkammer einer Gasturbinenanlage und/oder eines Dampfkessels einzusetzen und das nach der Verbrennung im Rauchgas befindliche Kohlendioxid auf üblichem Wege abzutrennen und einer weiteren Verwertung oder beispielsweise einer Sequestrierung zuzuführen. Entsprechendes gilt für Biogase oder Synthesegase mit hohen, eine Verbrennung jedoch erlaubenden Inertgasanteilen.

Eine abermals vorteilhafte Ausgestaltung der Erfindung sieht vor, dass der zur Verbrennung in der Brennkammer eingesetzte Sauerstoff einer Flüssigsauerstoffquelle entnommen, in einem Verdampfer unter Entstehung einer hochgespannten Sauerstoffgases verdampft und das hochgespannte Sauerstoffgas der Brennkammer zugeführt wird. Dabei wird zweckmäßigerweise der Wärmeinhalt des Rauchgases zum Verdampfen des Sauerstoffs im Verdampfer eingesetzt, um aufwändige zusätzliche Vergaseranlagen einzusparen.

Bevorzugt eignet sich das erfindungsgemäße Verfahren für den Einsatz zur Erzeugung elektrischer Energie in einem GuD - Kraftwerk. Dabei ist der Energieerzeugung in der Gasturbine ein weiterer Schritt zur Energiegewinnung in einer Dampfturbine nachgeschaltet, wobei insbesondere das heiße Abgas aus der Gasturbine zum Erzeugen bzw. Erhitzen des Dampfes eingesetzt wird. Es ist jedoch auch möglich, zur Dampferzeugung eine separate Brennkammer einzusetzen, in der ein Brennstoff mit einem Oxidationsmittel verbrannt wird. Auch hierbei kommt bevorzugt ein mit einem Moderationsgas versetzter gasförmiger oder flüssiger Brennstoff zum Einsatz, der in der Brennkammer des Dampfkessels mit einem sauerstoffreichen Gas oder reinem Sauerstoff verstromt wird. Als Moderationsgas dient beispielsweise Kohlendioxid oder ein anderes, bereits im Brennstoff enthaltenes Inertgas zum Einsatz.

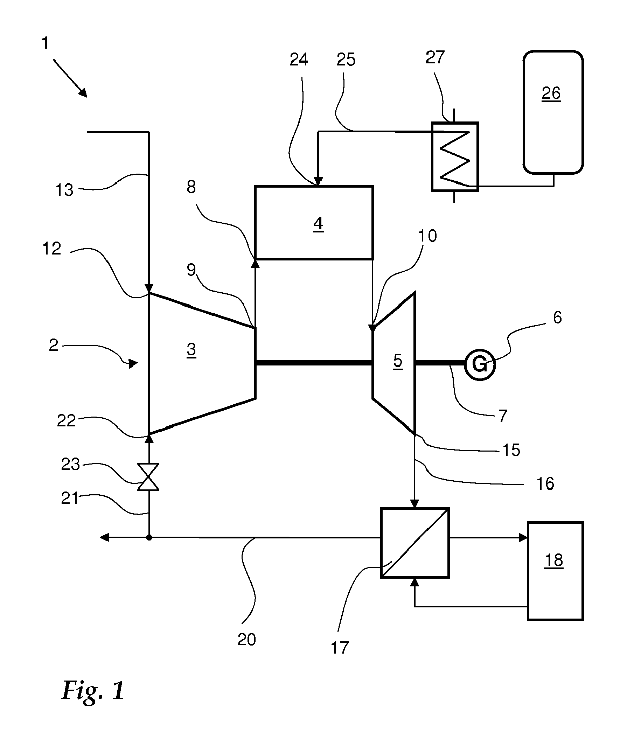

Anhand der Zeichnung soll ein Ausführungsbeispiel der Erfindung näher erläutert werden. Die Zeichnung (Fig. 1) zeigt schematisch den Aufbau einer erfindungsgemäßen Gasturbinenanlage.

Die Gasturbinenanlage 1 umfasst eine Turbogruppe 2 mit einem Verdichter 3, einer Brennkammer 4 und einer Turbine 5. Turbine 5 und Verdichter 3 sind hier mit einem Generator 6 antriebsgekoppelt, was durch eine Welle 7 angedeutet werden soll. Die Brennkammer 4 ist an ihrem Brennstoffeinlass 8 mit einem Auslass 9 des Verdichters 3 und ausgangseitig mit einem Einlass der Turbine 5 verbunden. Ein Einlass 12 des Verdichters 3 wird über eine Brennstoffzuleitung 13 mit gasförmigem oder flüssigem Brennstoff, beispielsweise Erdgas, Biogas oder Synthesegas, versorgt. Von einem Auslass 15 der Turbine 5 führt eine Rauchgasleitung 16 optional zu einem Wärmetauscher 17, der zur Nutzung der im Rauchgas enthaltenen Wärmeenergie dient und mit einer weiteren Einrichtung, beispielsweise einer Dampfturbinenanlage 18 wirkverbunden ist. Das im Wärmetauscher 17 abgekühlte Rauchgas wird über eine Rauchgasleitung 20 abgeführt und beispielsweise in hier nicht gezeigter Weise einer Kohlendioxid-Trenneinrichtung zugeführt. Von der Rauchgasleitung 20 zweigt eine Rückführleitung 21 ab, die wiederum mit einem Einlass 22 des Verdichters 3 verbunden ist, und in der ein Regelventil 23 angeordnet ist. Die Brennkammer 4 weist einen weiteren Einlass 24 auf, an dem eine Sauerstoffzuleitung 25 einmündet. Die als Hochdruckleitung für gasförmigen Sauerstoff ausgebildete Sauerstoffleitung ist mit einem Quelle 26 für flüssigen Sauerstoff, beispielsweise ein Tank für flüssigen Sauerstoff oder eine Luftzerlegungsanlage, mit nachgeschaltetem Verdampfer 27 verbunden. Beim Verdampfer 27 kann es sich beispielsweise um einen Kaltvergaser handeln, bei dem der Sauerstoff durch Wärmeaustausch mit Luft oder einem anderen Medium verdampft wird. Zum Verdampfen des Sauerstoffs im Wärmetauscher 27 kann vorteilhaft auch der Wärmeinhalt von Rauchgas eingesetzt werden, das aus einer der Rauchgasleitungen 16 oder 20 entnommen und dem Wärmetauscher 27 zugeführt wird.

Beim Betrieb der Gasturbinenanlage 1 wird Brennstoff dem Verdichter 3 der Turbogruppe 2 zugeführt. Im Ausführungsbeispiel wird angenommen, dass der Brennstoff im wesentlichen drucklos gegenüber dem Umgebungsdruck vorliegt; es ist jedoch auch vorstellbar, dass der Brennstoff mit einem gewissen höheren Eingangsdruck herangeführt wird, wie er sich beispielsweise aus vorangegangenen Prozessschritten bei der Erzeugung oder bei der Förderung des Brennstoffs ergibt. Dieser Eingangsdruck kann eine Höhe bis zur Höhe des Betriebsdrucks in der Brennkammer 4 betragen - in diesem Fall wird der Brennstoff ohne Zwischenschaltung eines Verdichters unmittelbar am Brennstoffeinlass 8 in die Brennkammer 4 eingeleitet. Gleichzeitig wird Flüssigsauerstoff aus der Quelle 26 im Verdampfer 27 verdampft, wobei sich ein Sauerstoffgas mit einem Druck ergibt, der zumindest dem Betriebsdruck in der Brennkammer 4 entspricht. Eine hier nicht gezeigte Druck- und Mengenregulierung am Verdampfer 27 sorgt dafür, dass die zur Verbrennung erforderliche Menge an Sauerstoff mit dem gewünschten Druck bereitgestellt wird. Demzufolge strömt der Sauerstoff in die Brennkammer 4 ein, ohne dass es hierzu einer weiteren Verdichtung des Sauerstoffs bedarf. In der Brennkammer 4 wird der zugeführte Brennstoff mit dem zugeführten Sauerstoff verbrannt. Das entstehende Rauchgas wird an der Turbine 5 unter Erzeugung elektrischer Energie im Generator 6 entspannt und anschließend über die Rauchgasleitungen 16, 20 abgeführt. Im Wärmetauscher 17 wird die Wärme des Rauchgases zur Erhitzung eines Mediums, beispielsweise Wasserdampf eingesetzt, der beispielsweise in einer Dampfturbinenanlage 18 zur Energieerzeugung eingesetzt wird. Die Dampfturbinenanlage 18 kann im Übrigen auch - hier nicht gezeigt - mit einer eigenen Brennkammer ausgerüstet sein, in der ein mit Moderationsgas versetzter Brennstoff unter Einsatz von Sauerstoff oder einem sauerstoffreichen Gas verbrannt wird.

Um eine zu starke Belastung des eingesetzten Materials aufgrund hoher Verbrennungstemperaturen zu vermeiden, ist in der Brennkammer 4 zusätzlich ein inertes Moderationsgas anwesend. Bei dem Moderationsgas handelt es sich insbesondere um Kohlendioxid. Das Moderationsgas wird entweder mit dem Brennstoff über die Brennstoffzuführung 13 eingeleitet, und/oder es wird Rauchgas aus der Rauchgasleitung 20 als Moderationsgas eingesetzt, das zumindest teilweise über die Rückführleitung 21 und Einlass 22 dem Verdichter zugeführt wird. Der erstgenannte Fall, dass das Moderationsgas mit dem Brennstoff eingeleitet wird, kann beispielsweise dadurch realisiert werden, dass es sich beim Brennstoff um eine Medium handelt, das bereits eine hinreichende Menge an inerten Gasanteilen enthält, wie bestimmte, kohlendioxidreiche Erdgase oder Synthesegas. Eine andere Möglichkeit besteht darin, aus externen Quellen stammendes Moderationsgas dem Brennstoff beizumischen. Die Rückführleitung 21 ermöglicht eine Regelung des Moderationsgasanteils in der Brennkammer 4 mittels einer hier nicht gezeigten Steuerung. Dabei wird beispielsweise die Temperatur in der Brennkammer gemessen und in Abhängigkeit von der gemessenen Temperatur das Regelventil 23 entsprechend angesteuert und dadurch der Zufluss von Moderationsgas verstärkt oder gedrosselt. Das nicht zur Moderation eingesetzte, kohlendioxidreiche Rauchgas wir abgeführt. Nach hier nicht gezeigten weiteren Stufen zur Reinigung bzw. Separation kann das im Rauchgas enthaltene Kohlendioxid beispielsweise unter Druck verflüssigt und sequestriert werden.

### Bezugszeichenliste

- 1.: Gasturbinenanlage
- 2.: Turbogruppe
- 3.: Verdichter
- 4.: Brennkammer
- 5.: Turbine
- 6.: Generator
- 7.: Welle
- 8.: Brennstoffeinlass
- 9.: Auslass (des Verdichters)
- 10.: Einlass (der Turbine)
- 11.: -
- 12.: Einlass (des Verdichters)
- 13.: Brennstoffzuleitung
- 14.: -
- 15.: Auslass (der Turbine)
- 16.: Rauchgasleitung
- 17.: Wärmetauscher
- 18.: Dampfturbinenanlage
- 19.: -
- 20.: Rauchgasleitung
- 21.: Rückführleitung
- 22.: Einlass (des Verdichters)
- 23.: Regelventil
- 24.: Einlass (der Brennkammer)
- 25.: Sauerstoffzuleitung
- 26.: Quelle
- 27.: Verdampfer

## Patentansprüche

1. Gasturbinenanlage, insbesondere zum Erzeugen elektrischer Energie, mit einer einen Verdichter (3), eine Brennkammer (4) und eine Turbine (5) aufweisenden Turbogruppe (2), mit einer Brennstoffzuführung (13) zum Zuführen von gasförmigem oder flüssigem Brennstoff zur Turbogruppe (2) , mit einer Zuführung (25) für ein Oxidationsmittel zur Turbogruppe und mit einer Rauchgasableitung (16,20) zum Abführen von Verbrennungsabgasen aus der Turbogruppe(2),
**dadurch gekennzeichnet, dass** die Brennstoffzuführung (13) in den Verdichter (3) der Turbogruppe (2) einmündet und die Zuführung (25) für das Oxidationsmittel eine an eine Sauerstoffquelle (26) angeschlossene Sauerstoffzuleitung umfasst, die in die Brennkammer (4) einmündet.

2. Gasturbinenanlage nach Anspruch 1, **dadurch gekennzeichnet, dass** als Sauerstoffquelle eine Quelle (26) für Flüssigstickstoff mit angeschlossenem Druckaufbauverdampfer (27) zur Herstellung eines durch die Verdampfung von Flüssigstickstoff bestimmten Gasdrucks in der Sauerstoffzuleitung (25) vorgesehen ist.

3. Gasturbinenanlage nach Anspruch 1 oder 2, **dadurch gekennzeichnet, dass** die Brennstoffzuführung (13) mit einer Zuleitung für ein Moderationsgas, insbesondere Kohlendioxid verbunden ist.

4. Gasturbinenanlage nach einem der vorhergehenden Ansprüche, **dadurch gekennzeichnet, dass** die Rauchgasableitung (16, 20) über eine Rückführleitung (21) mit der Turbogruppe (2) verbunden ist.

5. Verfahren zum Betreiben einer Anlage zur Energieerzeugung,
bei dem ein mit einem Moderationsgas versetzter gasförmiger oder flüssiger Brennstoff der Brennkammer (4) der Turbogruppe (2) einer Gasturbinenanlage und/oder eines Dampfkessels zugeführt wird, anschließend Sauerstoff in die Brennkammer (4) eingeleitet und mit dem Brennstoff zu einem Rauchgas verbrannt wird.

6. Verfahren nach Anspruch 5, **dadurch gekennzeichnet, dass** der mit Moderationsgas versetzte Brennstoff vor der Zuführung an die Brennkammer (4) verdichtet und Sauerstoff unter hohem Druck in die Brennkammer (4) eingeleitet wird und mit dem Brennstoff zu einem Rauchgas verbrennt.

7. Verfahren nach Anspruch 5 oder 6 **dadurch gekennzeichnet, dass** das bei der Verbrennung des Brennstoffs mit dem Sauerstoff entstehende Rauchgas als Moderationsgas zumindest teilweise in die Brennkammer (4) rückgeführt wird.

8. Verfahren nach Anspruch 5 bis 7, **dadurch gekennzeichnet, dass** als mit Moderationsgas versetzter Brennstoff ein Gas mit hohem Inertgasanteil, insbesondere ein kohlendioxidhaltiges Erdgas, Biogas oder Synthesegas zum Einsatz kommt.

9. Verfahren nach einem der Ansprüche 5 bis 8, **dadurch gekennzeichnet, dass** der zur Verbrennung in der Brennkammer (4) eingesetzte Sauerstoff einer Flüssigsauerstoffquelle (26) entnommen, in einem Verdampfer (27) unter Entstehung einer hochgespannten Sauerstoffgases verdampft und das hochgespannte Sauerstoffgas der Brennkammer (4) zugeführt wird.

10. Verfahren nach Anspruch 9, **dadurch gekennzeichnet, dass** zum Verdampfen des Sauerstoffs im Verdampfer (27) der Wärmeinhalt des Rauchgases eingesetzt wird.

11. Verfahren nach einem der Ansprüche 5 bis 10, **gekennzeichnet durch** den Einsatz zur Erzeugung elektrischer Energie in einem GuD-Kraftwerk.
